# EUROPEAN PATENT APPLICATION

(11) **EP 4 401 252 A1**
(43) Date of publication of application: **17.07.2024**
(21) Application number: 23307410.3
(22) Date of filing: 28.12.2023
(51) Int. Cl.: H02B 13/035, H02B 13/075

(54) **BUSBAR-SIDE VOLTAGE TRANSFORMER CABINET**

(30) Priority: 13.01.2023 CN 202320117060 U
(71) Applicant: Schneider Electric Industries SAS, 92500 Rueil-Malmaison (FR)
(72) Inventor: TANG, Min, Shanghai, 201203 (CN); QUE, Yinzhong, Shanghai, 201203 (CN); LIU, Fei, Shanghai, 201203 (CN); LU, Haifeng, Shanghai, 201203 (CN); Bogie, Wolfgang, 93055 Regensburg (DE)
(74) Representative: Manitz Finsterwald Patent- und Rechtsanwaltspartnerschaft mbB

(57) **Abstract**

The present disclosure discloses a busbar-side voltage transformer cabinet, which includes: a busbar chamber, configured to install a busbar therein; an inflation chamber, arranged below the busbar chamber and configured to install an electrical device therein, and filled with insulating gas; and a cable chamber, arranged below the inflation chamber and configured to install a feeder therein, the cable chamber is installed with a voltage transformer, and the inflation chamber is provided with an isolation device configured to switch the voltage transformer between an on state and a grounded state. According to the present disclosure, there is no need to add an additional isolation switch cabinet to control the grounding and connection of the voltage transformer; the voltage transformer is installed in the cable chamber at the bottom, so there is no need for additional small gas box, which saves space and the height of the cabinet is the same as that of other cabinets.

## Description

### TECHNICAL FIELD

The present disclosure relates to a new type busbar-side voltage transformer cabinet.

### BACKGROUND

At present, for some gas-insulated voltage transformer cabinets, voltage transformers are installed on the feeder side, and for some gas-insulated voltage transformer cabinets, voltage transformers are installed on the busbar side, but most of the gas-insulated voltage transformer cabinets do not have isolation devices. At present, if isolation devices need to be added to some busbar-side voltage transformer cabinets, an extra small gas box needs to be placed at the top of the cabinet on the busbar side, so that the height of the whole cabinet will increase. Other busbar-side voltage transformer cabinets with isolation devices do not need to add additional small gas boxes, but the isolation devices are arranged close to the feeder bushing, and the operating mechanism for operating the isolation device can only be arranged in the cable chamber like the feeder-side voltage transformer cabinets with isolation devices, so that the operating mechanism can only be operated after opening the door of the cable chamber. It is needed to develop a new busbar-side voltage transformer cabinet with isolation device to overcome one or more of the above shortcomings.

### SUMMARY

In view of the above problems, according to the present disclosure, a busbar-side voltage transformer cabinet is proposed. The busbar-side voltage transformer cabinet includes: a busbar chamber, configured to install a busbar therein; an inflation chamber, arranged below the busbar chamber and configured to install an electrical device therein and filled with insulating gas; and a cable chamber, arranged below the inflation chamber and configured to install a feeder therein, the cable chamber is installed with a voltage transformer, and the inflation chamber is provided with an isolation device configured to switch the voltage transformer between an on state and a grounded state, the voltage transformer is connected with the busbar when the voltage transformer is in the one state.

The busbar-side voltage transformer cabinet according to the present disclosure has the following advantages: the isolation device can connect the voltage transformer with the busbar, and can also ground the voltage transformer, which not only enables customers to do insulation tests of cables and the like on site without disassembling the voltage transformer, but also enables the electrical cabinet to be put into operation quickly after a short-term fault of the voltage transformer, and can greatly reduce the power outage time when repairing or replacing the voltage transformer; a voltage transformer circuit with isolation function is integrated in the inflation chamber, an additional isolation switch cabinet is not needed to control the grounding and connection of the voltage transformer; the voltage transformer is installed in the cable chamber at the bottom, not in the busbar chamber at the top, the voltage transformer is connected with the busbar at the top through the isolation device arranged in the inflation chamber, so there is no need for additional small gas box, which saves space and the height of the cabinet is consistent with other cabinets.

The busbar-side voltage transformer cabinet according to the present disclosure can have one or more of the following features.

According to an embodiment, a busbar bushing connected to the busbar extends from the busbar chamber into the inflation chamber, and the voltage transformer is connected with the busbar by being connected with the busbar bushing. So that, a closing stationary contact configured to be connected with the busbar in the isolation device can be connected to the busbar bushing in the inflation chamber.

According to an embodiment, the busbar-side voltage transformer cabinet further includes: a mechanism chamber arranged outside the inflation chamber and configured to be accessible from outside, and an operating mechanism for operating the isolation device to switch the voltage transformer between the on state and the grounded state is arranged in the mechanism chamber. Because the operating mechanism for operating the isolation device is fixed in the mechanism chamber outside the busbar-side voltage transformer cabinet, instead of in the cable chamber, so it is convenient for users to operate.

According to an embodiment, the isolation device includes a drive shaft configured to rotate between a first shaft position and a second shaft position, in the first shaft position, the voltage transformer is connected with the busbar bushing, and in the second shaft position, the voltage transformer is grounded. The arrangement of the rotatable drive shaft can realize that the voltage transformer can be selectively connected to the busbar or grounded.

According to an embodiment, the drive shaft is connected with the operating mechanism, and the operating mechanism drives the drive shaft to rotate between the first shaft position and the second shaft position. The drive shaft can be actuated by an operating mechanism arranged in the mechanism chamber outside the inflation chamber, which is convenient for users.

According to an embodiment, the isolation device is installed close to the busbar bushing. Therefore, the isolation device can be installed in the inflation chamber, and the closing stationary contact configured to be connected with the busbar can be conveniently connected to the busbar bushing.

According to an embodiment, the busbar-side voltage transformer cabinet further includes a transformer bushing connected with the voltage transformer, and the isolation device is connected with the transformer bushing through a hard copper rod. The connection between the isolation device and the voltage transformer is realized, and the connection of the hard copper bar is reliable.

According to an embodiment, the electrical device is a circuit breaker or an isolation switch. The busbar-side voltage transformer cabinet according to the present disclosure is suitable for these two situations.

According to an embodiment, the insulating gas is dry air, which is more environmentally friendly than SF6 gas.

According to an embodiment, the busbar-side voltage transformer cabinet with the isolation device has same height, width and depth with an electrical cabinet filled with SF6 gas and having no voltage transformer isolation function. Therefore, the isolation device for the voltage transformer cabinet according to the present disclosure can be installed in the original electrical cabinet without isolation function, so as to realize the isolation function.

### BRIEF DESCRIPTION OF DRAWINGS

In order to explain the technical solution of the embodiment of the present disclosure more clearly, the accompanying drawings of the embodiment of the present disclosure will be briefly introduced below. Among them, the accompanying drawings are only used to show some embodiments of the present disclosure, and are not limited to all embodiments of the present disclosure.
Fig. 1 is a perspective view of a busbar-side voltage transformer cabinet according to an embodiment of the present disclosure;
Fig. 2 is a perspective view of a busbar-side voltage transformer cabinet according to another embodiment of the present disclosure;
Fig. 3 is an internal perspective view of a busbar-side voltage transformer cabinet according to an embodiment of the present disclosure;
Fig. 4 is an internal perspective view of a busbar-side voltage transformer cabinet according to another embodiment of the present disclosure;
Fig. 5 is a perspective view of a mechanism chamber of a busbar-side voltage transformer cabinet according to an embodiment of the present disclosure.

### List of reference numerals:

1-busbar chamber
110-busbar
120-busbar bushing
2-inflation chamber
210-isolation device
211-drive shaft
220-hard copper rod
3-cable chamber
310-voltage transformer
320-transformer bushing
4-mechanism chamber
410-operating mechanism

### DETAILED DESCRIPTION

In order to make the purpose, technical solution and advantages of the technical solution of the present disclosure more clear, the technical solution of the embodiment of the present disclosure will be described clearly and completely with reference to the accompanying drawings of specific embodiments of the present disclosure. The same reference numerals in the drawings represent the same parts. It should be noted that the described embodiment is a part of the embodiment of the present disclosure, not the whole embodiment. Based on the described embodiments of the present disclosure, all other embodiments obtained by those skilled in the field without creative labor belong to the protection scope of the present disclosure.

Unless otherwise defined, technical terms or scientific terms used herein shall have their ordinary meanings as understood by people with ordinary skills in the field to which this invention belongs. The words "first", "second" and similar words used in the specification and claims of the patent application of the present invention do not indicate any order, quantity or importance, but are only used to distinguish different components. Similar words such as "including" or "containing" mean that the elements or objects appearing before the word cover the elements or objects listed after the word and their equivalents, without excluding other elements or objects. Similar words such as "connect" or "connected" are not limited to physical or mechanical connection, but can include electrical connection, whether direct or indirect. "Up", "Down", "Left" and "Right" are only used to indicate the relative positional relationship. When the absolute position of the described object changes, the relative positional relationship may also change accordingly.

Hereinafter, the present disclosure will be described in detail below by describing example embodiments.

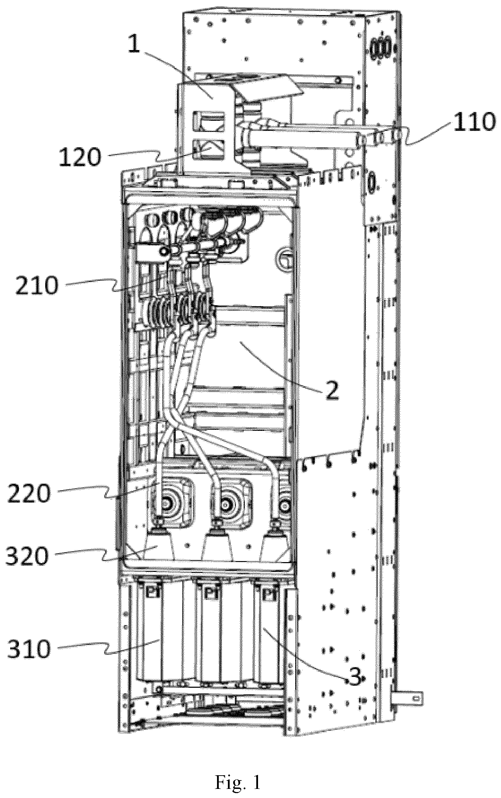

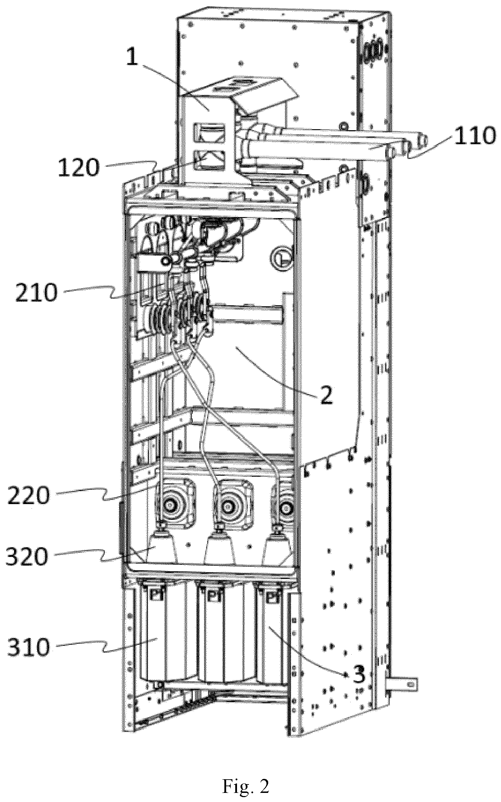

Figs. 1 and 2 are busbar-side voltage transformer cabinets according to two embodiments of the present disclosure, respectively. As illustrated by Figs. 1 and 2, the busbar-side voltage transformer cabinet includes a busbar chamber 1 located above, a cable chamber 3 located below, and an inflation chamber 2 located between the busbar chamber 1 and the cable chamber 3. The busbar 110 is installed in the busbar chamber 1, and the busbar 110 includes, for example, three solid busbars. Feeders are installed in the cable chamber 3, and there are three feeders, for example. The inflation chamber 2 is filled with insulating gas, which can be SF6 or dry air, preferably environmentally friendly dry air. An electrical device (not shown) is installed in the inflation chamber 2, which is a circuit breaker in Fig. 1 and an isolation switch in Fig. 2.

A voltage transformer 310 is arranged in the busbar-side voltage transformer cabinet according to the present disclosure, and the voltage transformer 310 is installed in the cable chamber 3. An additional isolation device 210 is installed in the inflation chamber 2. The isolation device 210 is configured to switch the voltage transformer 310 between an on state and a grounded state. In the on state, the voltage transformer 310 is connected with the busbar 110, that is, the voltage transformer 310 is connected with a main circuit; in the grounded state, the voltage transformer 310 is connected to a grounding circuit, that is, the voltage transformer 310 is isolated from the main circuit. The isolation device 210 can connect the voltage transformer 310 with the busbar 110, and can also ground the voltage transformer 310, which can not only make it unnecessary for customers to disassemble the voltage transformer 310 when doing insulation tests of cables and the like on site, but also enable the electrical cabinet to be put into operation quickly after a short-term fault of the voltage transformer 310, and further greatly reduce the power outage time when repairing or replacing the voltage transformer 310.

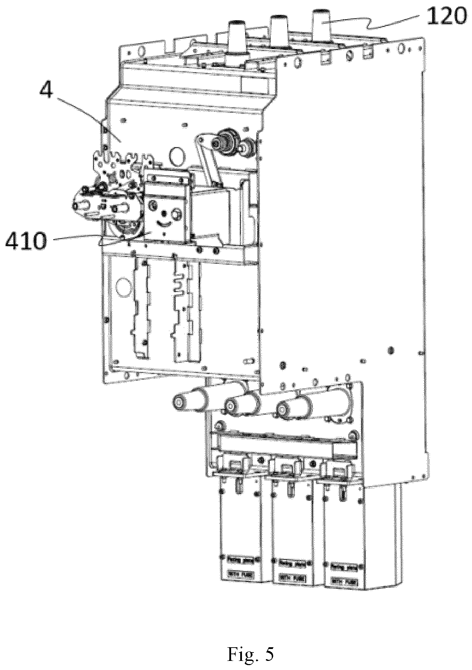

As illustrated by Fig. 5, the busbar-side voltage transformer cabinet according to the present disclosure further includes a mechanism chamber 4, which is arranged outside the inflation chamber 2, that is, close to the user side, and the user can approach the mechanism chamber 4 from the outside. An operating mechanism 410 for operating the isolation device 210 is provided in the mechanism chamber 4. Through the operation of the operating mechanism 410, for example, by the user rotating an operating handle to different specific positions, the isolation device 210 will be driven to correspond different specific positions, so that the voltage transformer 310 can be switched between the on state and the grounded state. Because the operating mechanism 410 for operating the isolation device 210 is fixed in the mechanism chamber 4 outside the busbar-side voltage transformer cabinet, but not in the cable chamber 3, it is not necessary to open the door of the cable chamber 3 for further operation, which is convenient for users.

Referring back to Figs. 1 and 2, the busbar chamber 1 is also provided with a busbar bushing 120 connected to the busbar 110, which extends from the busbar chamber 1 into the inflation chamber 2, and the isolation device 210 is arranged close to the busbar bushing 120. As mentioned above, the voltage transformer 310 is arranged in the cable chamber 3, the transformer bushing 320 connected with the voltage transformer 310 extends from the cable chamber 3 into the inflation chamber 2, and the isolation device 210 located in the inflation chamber 2 is connected with the transformer bushing 320 through the hard copper rod 220, thus being connected with the voltage transformer 310. The hard copper rod 220 is sheathed with silicone rubber, for example. In Fig. 1 and Fig. 2, the arrangement of the hard copper rod 220 is different due to the different structures and space occupied in the inflation chamber 2 of the circuit breaker and the isolation switch.

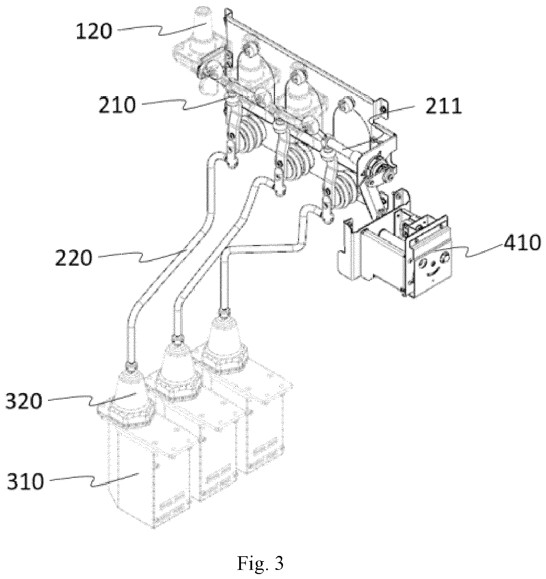

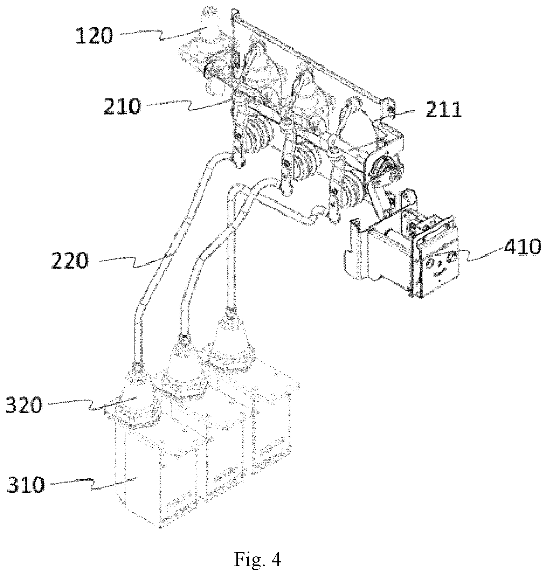

Figs. 3 and 4 show the structure of the isolation device 210 and the connection relationship between the isolation device 210 and other components in the busbar-side voltage transformer cabinet according to different embodiments of the present disclosure, and the partitions between the chambers are omitted for clarity. The difference between Fig. 3 and Fig. 4 lies in that, Fig. 3 corresponds to Fig. 1, the electrical device is a circuit breaker, and Fig. 4 corresponds to Fig. 2, and the electrical device is an isolation switch. The isolation device 210 includes a drive shaft 211, the drive shaft 211 is connected to the operating mechanism 410. For example, the drive shaft 211 is connected to a rotating shaft of a sealing flange and the rotating shaft of the sealing flange is connected to the operating mechanism 410 through a driving crank arm and a connection plate. The operating mechanism 410 can actuate the drive shaft 211 to rotate between a first shaft position and a second shaft position, in the first shaft position, a movable contact of the isolation device 210 contacts and conducts with a closing stationary contact provided on the busbar bushing 120, so that the voltage transformer 310 is connected with the busbar bushing 120 and then with the busbar 110, and, in the second shaft position, the movable contact of the isolation device 210 contacts and conducts with a grounded stationary contact, so that the voltage transformer 310 is grounded.

The busbar-side voltage transformer cabinet according to the present disclosure can save space without adding additional small gas box. Compared with the electrical cabinet filled with SF6 gas and without voltage transformer isolation function, the busbar-side voltage transformer cabinet filled with dry air according to the present disclosure has the same height, width and depth. That is to say, the isolation device 210 of the busbar-side voltage transformer cabinet according to the present disclosure can be installed in the original electrical cabinet without isolation function, so as to realize the isolation function.

The exemplary implementation of the bus-side voltage transformer cabinet proposed by the present disclosure has been described in detail with reference to the preferred embodiments. However, it can be understood by those skilled in the art that various variations and modifications can be made to the above specific embodiment without departing from the concept of this present disclosure, and various technical features and structures proposed by this present disclosure can be combined in various ways without exceeding the protection scope of this present disclosure.

## Claims

1. A busbar-side voltage transformer cabinet, comprising:
a busbar chamber, configured to install a busbar therein;
an inflation chamber, arranged below the busbar chamber and configured to install an electrical device therein, and filled with insulating gas; and
a cable chamber, arranged below the inflation chamber and configured to install a feeder therein,
wherein the cable chamber is installed with a voltage transformer, the inflation chamber is provided with an isolation device configured to switch the voltage transformer between an on state and a grounded state, the voltage transformer is connected with the busbar when the voltage transformer is in the one state.

2. The busbar-side voltage transformer cabinet according to claim 1, wherein a busbar bushing connected to the busbar extends from the busbar chamber into the inflation chamber, the voltage transformer is connected with the busbar by being connected with the busbar bushing.

3. The busbar-side voltage transformer cabinet according to claim 2, further comprising:
a mechanism chamber arranged outside the inflation chamber and configured to be accessible from outside, an operating mechanism for operating the isolation device to switch the voltage transformer between the on state and the grounded state is arranged in the mechanism chamber.

4. The busbar-side voltage transformer cabinet according to claim 3, wherein the isolation device comprises a drive shaft configured to rotate between a first shaft position and a second shaft position, in the first shaft position, the voltage transformer is connected with the busbar bushing, and in the second shaft position, the voltage transformer is grounded.

5. The busbar-side voltage transformer cabinet according to claim 4, wherein the drive shaft is connected with the operating mechanism, the operating mechanism drives the drive shaft to rotate between the first shaft position and the second shaft position.

6. The busbar-side voltage transformer cabinet according to any one of claims 2-5, wherein the isolation device is installed close to the busbar bushing.

7. The busbar-side voltage transformer cabinet according to any one of claims 1-5, further comprising a transformer bushing connected with the voltage transformer, the isolation device is connected with the transformer bushing through a hard copper rod.

8. The busbar-side voltage transformer cabinet according to any one of claims 1-5, wherein the electrical device is a circuit breaker or an isolation switch.

9. The busbar-side voltage transformer cabinet according to any one of claims 1-5, wherein the insulating gas is dry air.

10. The busbar-side voltage transformer cabinet according to claim 9, wherein the busbar-side voltage transformer cabinet with the isolation device has same height, width and depth with an electrical cabinet filled with SF6 gas and having no voltage transformer isolation function.
